## Europäisches Patentamt
## European Patent Office
## Office européen des brevets

(11) Publication number: **0 046 512**
**B1**

# EUROPEAN PATENT SPECIFICATION

(45) Date of publication of patent specification: **14.03.84**

(51) Int. Cl.³: **B 23 Q 3/154**

(21) Application number: **81105809.8**

(22) Date of filing: **23.07.81**

(54) Magnetic chuck.

(30) Priority: **21.08.80 JP 114077/80**

(43) Date of publication of application:
**03.03.82 Bulletin 82/9**

(45) Publication of the grant of the patent:
**14.03.84 Bulletin 84/11**

(84) Designated Contracting States:
**DE FR GB IT NL**

(56) References cited:
**FR - A - 1 149 428**
**GB - A - 813 308**
**US - A - 3 503 024**

(73) Proprietor: **Kanetsu Kogyo Kabushiki Kaisha**
**1111 Oaza Uedahara, Ueda-shi**
**Nagano-ken (JP)**

(72) Inventor: **Uchikune, Mamoru**
**8-25, Chuo 1-chome**
**Ueda-shi Nagano-ken (JP)**
Inventor: **Yanagisawa, Kiyoshi**
**699, Oaza Sumiyoshi**
**Ueda-shi Nagano-ken (JP)**
Inventor: **Tagami, Mutsukazu**
**868-2, Oaza Uedahara**
**Ueda-shi Nagano-ken (JP)**
Inventor: **Shimizu, Taketo**
**778, Oaza Motohara Sanada-cho**
**Chiisagata-gun Nagano-ken (JP)**
Inventor: **Horiuchi, Kunio**
**370-4, Oaza Yoshida**
**Ueda-shi Nagano-ken (JP)**
Inventor: **Sakaguchi, Hiroo**
**926-3, Oaza Kabatake**
**Ueda-shi Nagano-ken (JP)**

(74) Representative: **Grams, Klaus Dieter, Dipl.-Ing.**
**et al,**
**Patentanwaltsbüro Tiedtke-Bühling-Kinne- Grupe-**
**Pellmann-Grams Bavariaring 4**
**D-8000 München 2 (DE)**

Courier Press, Leamington Spa, England.

Magnetic chuck

Background of the invention

This invention relates to a magnetic chuck for removably holding magnetic body, and more particularly to a magnetic chuck in which magnetic fluxes of permanent magnets are guided to a workpiece through magnetic materials to fix the workpiece and kept away from the workpiece to remove the workpiece.

Magnetic chucks are well known in which a top plate having pole members of magnetic material and separators of non-magnetic material arranged alternatively is opposed to a base plate, i.e. magnet assembly having yokes of magnetic material and permanent magnets arranged alternatively (document FR—A—1 149 428). Magnetic fluxes from said permanent magnets of the magnet assembly are guided to a workpiece through the pole members of the top plate to fix the workpiece to a mounting surface of the top plate and kept away from the workpiece by changing the relative position of said magnet assembly to said top plate to remove the workpiece. These well known magnetic chucks comprise those of system in which the fluxes are kept away from the workpiece or prevented from reaching it to remove it from the magnet chuck by separating the base plate or magnet assembly from the top plate and inducing magnetic lines of force to a bottom plate of magnetic material of a case receiving said magnet assembly to diminish the magnetic fluxes direction to the top plate and those of system in which the magnet assembly is slid laterally of the top plate to change passages of loops of magnetic fluxes from the permanent magnets. This invention relates to the latter system.

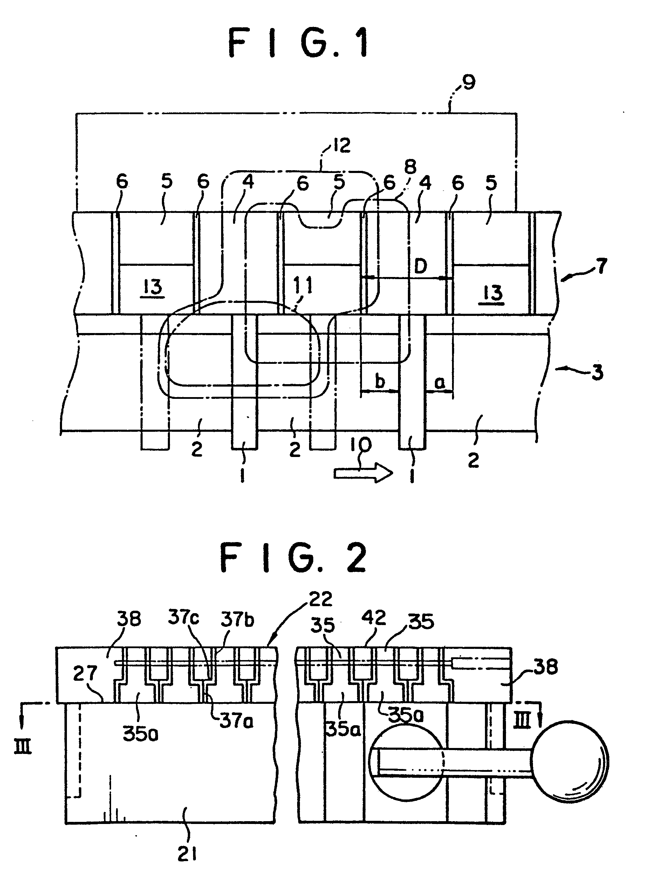

Now, some magnetic chucks have auxiliary poles of magnetic members for inducing magnetic fluxes arranged between respective main pole members, and whereby thin magnetic poles are arranged on a surface of the magnetic chuck or top plate in order to hold more firmly thin workpieces and ensure the loaded amount of small-sized parts, i.e. hold a lot of small-sized magnetic materials. In such magnetic chucks, when said magnetic assembly is slid laterally of the top plate, the yokes of the base plate may not be located in place depending on accuracy of finishing the respective main pole members, auxiliary pole members and further separators and accuracy of assembling the base plate, i.e. said magnetic assembly and top plate so that the magnetic fluxes leak from the top plate to the workpiece to apply slight attraction, i.e. residual attraction thereto. This condition will be described with reference to Fig. 1. Permanent magnets 2 and yokes 1 are arranged alternatively to constitute a base plate, i.e. magnetic assembly 3. Opposed to this magnetic assembly 3 is disposed a top plate 7 having main pole members 4, auxiliary pole members 5 and separators 6 arranged to constitute a magnetic chuck together with a case not shown. When the respective yokes 1 of the magnet assembly 3 are placed in positions shown by the solid line in Fig. 1, i.e. opposed to the main pole members 4, the magnetic chuck is placed under the magnetized condition. Fluxes 8 under this magnetized condition extend over the top plate 7 towards a workpiece 9 as shown in the drawing to fix the workpiece 9. When the magnet assembly 3 is slid in the direction of arrow 10 to place the magnetic chuck under non-magnetized condition, the yokes 1 of the magnet assembly 3 are placed in the positions shown by the phantom line in Fig. 1, i.e. opposed to the auxiliary pole members so that magnetic fluxes 11 passing through the respective yokes 1 draw loops. Consequently, the fluxes directed over the top plate 7 towards the workpiece disappear to permit the workpiece 9 to be removed. However, if the accuracy of finishing and assembling the respective parts is unsatisfactory, some yokes of the base plate 3 may not be placed opposed to the center of the auxiliary pole member 5 so that $b/a \neq 1$, for example, as shown in the drawing, when the magnet assembly 3 is slid in the direction of arrow 10, where a,b represent respectively distances between either side of a yoke and each auxiliary pole member 5 located on either side of the main pole member 4 corresponding to said yoke. Thus, magnetic fluxes 12 will be produced which leak over the top plate 7 towards the workpiece 9 and cause said residual attraction.

Summary of the invention

An object of this invention is to provide a magnetic chuck which can reduce the residual attraction under the non-magnetized condition while enhancing the magnetic attraction under the magnetized condition.

Now, since conventional magnetic chucks provided on the top plate with main pole members and auxiliary pole members are formed such that the main pole members and auxiliary pole members form a flat mounting surface at the top plate side opposed to a workpiece, i.e. surfaces of the main pole members and auxiliary pole members at such side are flush with each other, cavities 13 shown in Fig. 1 are provided between the auxiliary pole member shorter than the main pole member and base plate, i.e. magnet assembly, or the cavities are filled with non-magnetic fillers. According to the invention there is provided a magnetic chuck for removably holding magnetic substance by means of magnetic force, including: a casing opened at one side; a top plate fixed to and closing the opened side of said casing to define a mounting surface for said magnetic substance and having a plurality of magnetic main pole members and auxiliary pole members alternately arranged and non-magnetic separators being sandwiched therebetween, the pole members and separators being integrally incorporated in the top plate; and a magnet assembly received in said casing (21) so as to be slidable in the direction in which said main pole members and auxiliary pole members are arranged, so as to magnetize and demagnetize the mounting surface of the top plate and having a plurality of magnetic yokes and permanent magnets arranged alternately in said direction and which are integrally incorporated, each of said main pole members being extended at its end nearer to said magnet assembly the extensions extending in said direction adjacent to said magnet assembly and contacting corresponding yokes of said magnet assembly T-shaped main pole members as claimed in claim 3 are known per se (document GB—A—813 308).

Brief description of the drawings

Fig. 1 is an explanatory view showing a condition of a conventional magnetic chuck under which magnetic fluxes leak;

Fig. 2 is a front view showing a magnetic chuck according to this invention;

Fig. 3 is a sectional view taken along the line III—III of Fig. 2;

Fig. 4 is a sectional view taken along the line IV—IV of Fig. 3;

Fig. 5 is a sectional view, similar to Fig. 4, showing a condition of a base plate under which a workpiece is removed from the magnetic chuck; and

Fig. 6 is a front view showing another embodiment of separators.

Description of the preferred embodiments

Hereinafter will be described this invention with reference to its embodiments.

As shown in Figs. 2 to 4, a magnetic chuck according to this invention includes a base plate 20 or magnet assembly, a casing 21 for receiving this base plate 20 and a top plate 22 located opposed to the base plate 20 to be fixed to the casing 21.

The base plate 20 or magnet assembly has yokes 23 of magnetic material and permanent magnets 24 arranged alternatively and bonded to each other and is provided on both sides with guide plates 25. The lower edge of each guide plate 25 is mounted on a bottom plate 26 of the casing 21 to receive the base plate 20 therein so that the magnet assembly 20 can slide in the arranging direction of the yokes 23 and permanent magnets 24. While the yokes 23 located between the permanent magnets 24 have a T-shaped section in this embodiment, yokes having an I-shaped section may be used alternatively. Said permanent magnets 24 sandwich the yokes 23 between pole surfaces having identical polarities (S.S. or N,N).

The casing 21 preferably formed of non-magnetic material receives and slidably supports the magnet assembly 20 and forms a box opened upward at 27. This casing 21 is provided on one side of a longitudinal end with a boss 28 having a through hole 28a through which a shaft 29 extends rotatably and is provided on the outer end with a handle 29. The shaft 29 is formed on the inner end with a crank 31 which is rotatably inserted into a hole provided in a crank rod 33, and the crank rod 33 is mounted pivotably on a shaft 32 implanted in the magnet assembly 20.

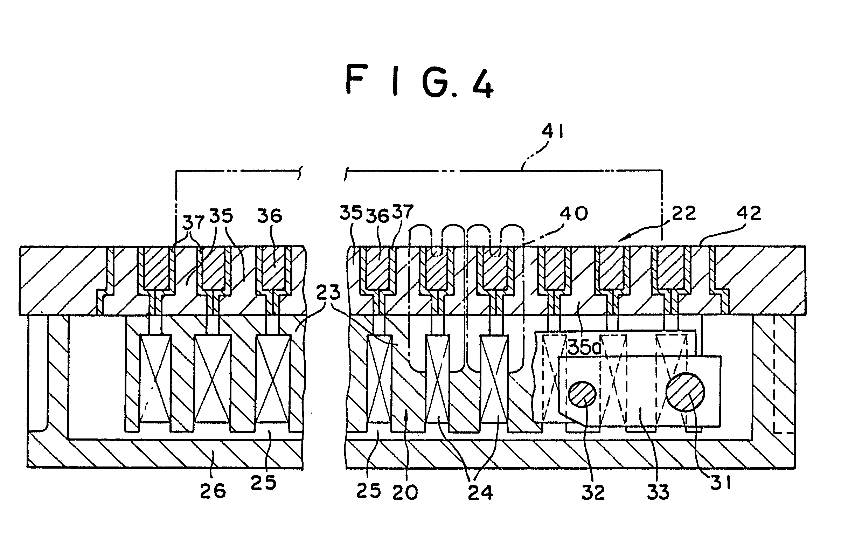

The top plate 22 has main pole members 35, 38 of magnetic material and auxiliary pole members 36 arranged alternatively and sandwiching respectively separators 37 of non-magnetic material. The first main pole members 35 are formed such that the portions 35a facing the magnet assembly 20 extend in the sliding direction of the magnet assembly 20, i.e. horizontal direction as viewed in Fig. 2 and Fig. 4, and each pole member 35 has an inverted T-shaped section. The auxiliary pole members 36 are formed to have a rectangular section. Lengthwise dimension of the extension 35a of each main pole member 35 in the sliding direction of said magnet assembly 20 is approximately equal to that of the upper portion of the yoke 23 engaging the main pole member. Each separator 37 interposed between the main pole member 35 and auxiliary pole member 36 is formed with two parallel portions 37a, 37b and an intermediate portion 37c connecting opposed ends of the both parallel portions to have a stretched-out Z-shaped section. Namely, the respective separators 37 are constituted by a pair of non-magnetic crank-shaped pieces which define a recess opened upward for receiving the auxiliary pole member 36 and cooperate with each other to constitute a separator assembly having a Y-shaped section. The main pole members 38 constituting both ends of the top plate 22 have substantially a L-shaped section. Between these main pole members 38 are disposed sequentially the separators 37 adjacent this second main pole member 38, the first main pole member 35, separator 37, auxiliary pole member 36, separator 37 and the first main pole member 35 in the order as shown in Fig. 2 to be secured fixedly to each other. They may be secured fixedly to each other by welding brazing, bonding, etc. Preferably they are relatively simply incorporated in the top plate 22 by providing a pair of through holes in each main pole member except the second main pole members 38, a pair of through holes having larger diameter than that of said through holes in one main pole member 38 and a pair of threaded holes in the other main pole member 38 and inserting long bolts of non-magnetic material from one side of the main pole members 38 into the respective through holes in these members to be threaded into the threaded holes.

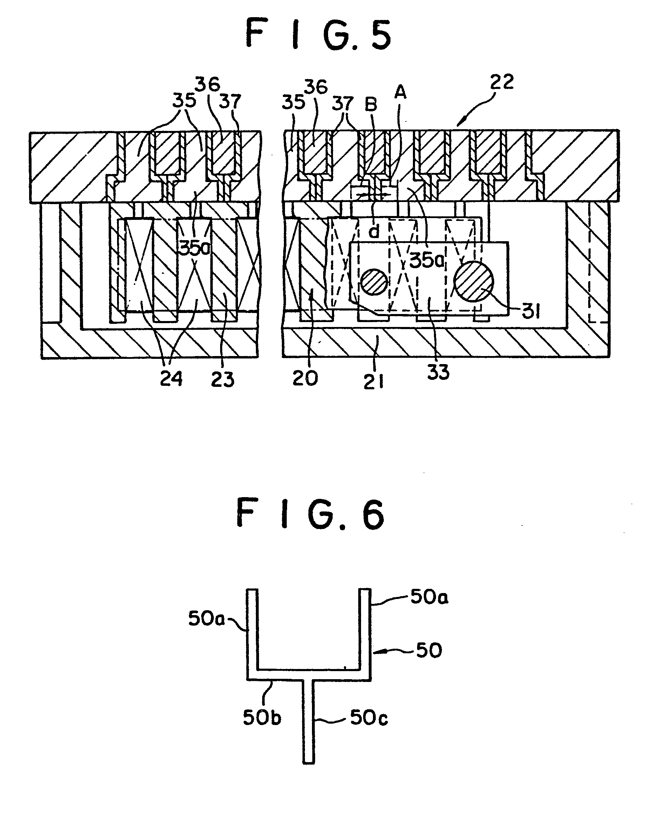

Fig. 6 shows a separator 50 of another configuration. This separator 50 comprises two parallel portions 50a an intermediate portion 50b interconnecting one ends of·both parallel portions 50a and a leg portion 50c extending from the middle of this intermediate portion 50b parallel to said parallel portions 50a in the opposite direction thereto to have an approximately Y-shaped section. Namely the separator shown in Fig. 6 is an integrally molded member having the Y-shaped section. Of course in this case said parallel portions 50a are spaced from each other enough for receiving the auxiliary pole member 36 between them.

When thus formed top plate 22 is fixedly secured to the casing 21 by screws (not shown) such that a flush surface defined by the main pole members 35, 38 and auxiliary pole members 36 are located at the opposite side to the magnet assembly 20, the extensions 35a of the main pole members 35 facing the magnet assembly 20 are interposed between the adjacent auxiliary pole members 36 and magnet assembly 20 to complete the magnetic chuck according to this invention.

In operation, when the handle 30 is turned to a position shown in Fig. 2 to magnetize the magnetic chuck, the base plate or magnet assembly 20 and top plate 22 occupy relative positions shown in Fig. 4. Namely, the respective yokes 23 of the magnet assembly 20 are located opposed to the main pole members 35 of the top plate 22. Hence magnetic fluxes from the each permanent magnet 24 of the base plate 20 form a loop. In each loop, the fluxes are induced through one of the yokes 23 to one of the main pole members 35 of the top plate 22 and from this main pole member 35 to a magnetic workpiece 41, then returned from the auxiliary pole member 36 again to the workpiece 41 and thereafter passed through the adjacent main pole member 35 to the adjacent yoke 23. In this case, since the respective permanent magnets 24 of the magnet assembly 20 are arranged so as to invert the magnetizing direction alternatively, the directions of magnetic fluxes in the adjacent loops are opposite to each other. Thus, the workpiece 41 is secured fixedly to the mounting surface 42 of the magnetic chuck, i.e. mounting surface defined by the main pole members 35, 38, auxiliary pole members 36 and separators 37.

Under said magnetized condition of the magnetic chuck according to this invention, each main pole member 35 contacts on the lower surface of said extension 35a provided on its lower portion with the upper surface of each corresponding yoke 23 uniformly. Thus, each main pole member 35 contacts the corresponding yoke 23 on a broader area than that in said conventional magnetic chuck shown in Fig. 1. Hence, the magnetic fluxes from the yokes 23 to corresponding main pole members 35 or vice versa do not pass through a conventional narrow contact portion, and thereby the contact portions between said main pole members 35 and yokes 23 are not saturated with the magnetic fluxes so that the magnetic saturation in said contact portion is diminished. Consequently, the magnetic attraction on the mounting surface 42 is remarkably enhanced to securely and firmly hold magnetic workpieces on the mounting surface.

In a conventional magnetic base shown in Fig. 1, it is considered that the lengthwise dimension of each main pole member 4 in the sliding direction of the base plate 3 is increased as a whole to increase the contact area between the main pole members 4 and yokes 1. However, this is extremely disadvantageous for holding small-sized magnetic bodies since pitch of the magnetic pole on the mounting surface is increased by such method.

On the other hand, in said magnetic chuck according to this invention, the magnetic attraction can be enhanced without increasing the pitch of magnetic pole on the mounting surface 42, as mentioned above.

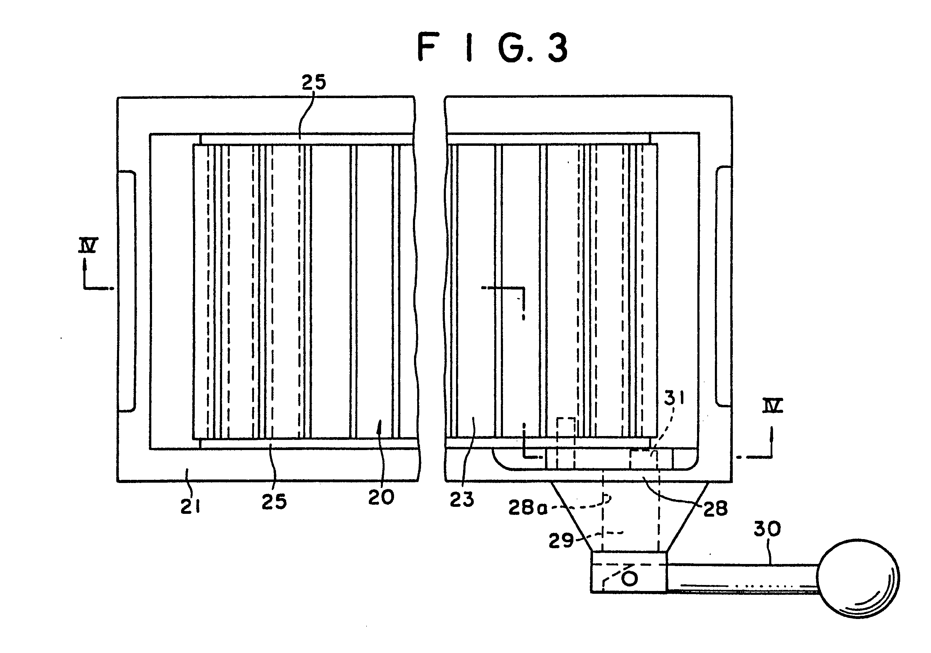

For demagnetizing the magnetic chuck to remove the workpiece from the mounting surface 42 will suffice the pivoting of the handle 30 to the left side, i.e. demagnetization position. By this pivoting of the handle 30 is moved the crank 31 to the opposite side spaced 180° from the position shown in Fig. 3. This movement pivots the crank rod 33 while being transmitted to the magnet assembly 20. The magnet assembly 20 slides on the bottom 26 of the casing 21 to occupy a position shown in Fig. 5. As a result, the yokes 23 of the magnet assembly 20 are located opposed to the auxiliary pole members 36 of the top plate 22 to keep the loops of the magnets away from the workpiece 41 which can be removed from the magnetic chuck. Then, even if errors of finishing the respective yokes 23 and permanent magnet 24 of the base plate 20 and the main pole members 35, auxiliary pole members 36 and separators 37 of the top plate 22 and further errors of assembling the respective members are produced, gaps d between the respective extensions 35a are sufficiently small compared with gaps D between the respective main pole members shown in Fig. 1, since the portion of the main pole member 35 opposed to the magnet assembly 20 is extended in the sliding direction of the magnet assembly 20. Hence, even if the yokes of the base plate 20 are not located in place, i.e. $B/A \neq 1$, B/A can approach 1 closer than said b/a. Namely as shown in Fig. 5, since the lengthwise contact dimension A of one main pole member 35 contacting one yoke 23 and the lengthwise contact dimension B of the other main pole member 35 become respectively larger than those of the conventional ones, the value of B/A can approach 1 closer than the value of b/a in said conventional magnetic chuck so that the effect of errors of finishing and assembling on the gaps d is small. Hence, the residual attraction affecting the workpiece is very few compared with that in the conventional magnetic chuck.

The magnetic chuck according to this invention can enhance the attraction and is affected little by the errors of finishing and assembling the members constituting the magnetic chuck so that the workpiece is not or hardly affected by the residual attraction, but thus easily removed from the magnetic chuck. Also, since the sliding surface of magnetic materials, i.e. sliding surface of the main pole member is large, the density of magnetic flux in the sliding surface is small and magnetic sliding resistance in change-over operation is small so that the magnet assembly can be lightly slid to permit a smooth change-over operation.

## Claims

1. A magnetic chuck for removably holding magnetic substance by means of magnetic force, including: a casing (21) opened at one side; a top plate (22) fixed to and closing the opened side of said casing to define a mounting surface (42) for said magnetic substance and having a plurality of magnetic main pole members (35) and auxiliary pole members (36) alternately arranged and non-magnetic separators (37, 50) being sandwiched therebetween, the pole members and separators being integrally incorporated in the top plate and a magnet assembly (20) received in said casing (21) so as to be slidable in the direction in which said main pole members (35) and auxiliary pole members (36) are arranged, so as to magnetize and demagnetize the mounting surface (42) of the top plate (22) and having a plurality of magnetic yokes (23) and permanent magnets (24) arranged alternately in said direction and which are integrally incorporated, each of said main pole members (35) being extended at its end nearer to said magnet assembly (20) the extensions (35a) extending in said direction adjacent to said magnet assembly (20) and contacting corresponding yokes (23) of said magnet assembly (20).

2. A magnetic chuck as defined in claim 1, wherein the lengthwise dimension of said each extension (35a) measured in said direction is approximately equal to that of said each corresponding yoke (23) in said direction.

3. A magnetic chuck as defined in claim 1 or in claim 2, wherein said main pole members comprise a plurality of first main pole members (35) having inverted T-shaped section and a pair of second main pole members (38) having L-shaped section and sandwiching said first main pole member, said respective auxiliary pole members (36) have rectangular section and said respective separator (37) comprises a pair of pieces having crank-shaped section, said both pieces being combined to form cooperatively Y-shaped section to define a recess for receiving said auxiliary pole member (36) and said first and second main pole members (35, 38), auxiliary pole members (36) and separators (37) being integrally combined by a fastening bolt to constitute said top plate (22).

4. A magnetic chuck as defined in claim 1 or in claim 2, wherein said separator (50) is a member having Y-shaped section and constituted integrally from a pair of parallel portions (50a) between which is received said auxiliary pole member (35), an intermediate portion (50b) interconnecting one ends of the parallel portions and a leg (50c) extending from the central portion of the intermediate portion.

## Patentansprüche

1. Magnetische Aufspannvorrichtung zum lösbaren Festhalten eines magnetischen Körpers mittels Magnetkraft, gekennzeichnet durch ein auf einer Seite offenes Gehäuse (21), eine Deckplatte (22), die auf der offenen Seite des Gehäuses befestigt ist und diese schließt und die eine Spannfläche (42) für den magnetischen Körper bildet und die zahlreiche magnetische Hauptpolelemente (35) und Hilfspolelemente (36) abwechselnd angeordnet aufweist, wobei dazwischen nicht-magnetische Trennelemente (37, 50) eingeschlossen sind und wobei die Polelemente und die Trennelemente in die Deckplatte einstückig integriert sind, und eine Magnetbaugruppe (20), die im Gehäuse (21) so angeordnet ist, daß sie in derjenigen Richtung verschiebbar ist, in der die Hauptpolelemente (35) und die Hilfspolelemente (36) angeordnet sind, um die Spannfläche der Deckplatte zu magnetisieren und zu entmagnetisieren, und die zahlreiche magnetische Joche (23) und Dauermagnete (24) aufweist, die in der genannten Richtung abwechselnd angeordnet und einstückig integriert sind, wobei jedes Hauptpolelement (35) an seinem der Magnetbaugruppe (20) zugewandten Ende verlängert ist und wobei die Verlängerungen (35a) in der genannten Richtung neben der Magnetbaugruppe (20) verlaufen und die entsprechenden Joche (23) der Magnetbaugruppe (20) berühren.

2. Aufspannvorrichtung nach Anspruch 1, dadurch gekennzeichnet, daß die in der genannten Richtung gemessene Längenabmessung einer jeden Verlängerung (35a) ungefähr gleich gerjenigen des jeweils zugeordneten Joche (23) in der genannten Richtung ist.

3. Aufspannvorrichtung nach Anspruch 1 oder 2, dadurch gekennzeichnet, daß die Hauptpolelemente zahlreiche erste Hauptpolelemente (35) mit einem Profil in Form eines umgekehrten "T" sowie ein Paar zweiter Hauptpolelemente (38) mit einem Profil in Form eines "L" umfassen, die die ersten Hauptpolelemente zwischen sich einschließen, daß die Hilfspolelemente (36) jeweils einen rechteckigen Querschnitt haben und daß die Trennelemente (37) jeweils zwei Teile mit einem zweifach abgewinkelten Profil aufweisen, wobei diese beiden Teile so zusammengefügt sind, daß sie gemeinsam ein Profil in Form eines "Y" bilden, das eine Ausnehmung zur Aufnahme des Hilfspolelementes (36) definiert, und daß die ersten und zweiten Hauptpolelemente (35, 38) die Hilfspolelemente (36) und die Trennelemente (37) mit Hilfe eines Spannbolzens so zusammengehalten sind, daß sie die Deckplatte (22) bilden.

4. Aufspannvorrichtung nach Anspruch 1 oder 2, dadurch gekennzeichnet, daß das Trennelement (50) ein Element mit einem Profil in Form eines "Y" ist, das einstückig gebildet ist und aus zwei parallelen Abschnitten (50a), zwischen denen das Hilfspolelement (36) angeordnet ist, einem Zwischenabschnitt (50b), der die einen Enden der parallelen Abschnitte miteinander verbindet und einem Schenkel (50c), der von der Mitte des Zwischenabschnitte ausgeht.

**Revendications**

1. Etau magnétique retenant des substances de façon amovible par le moyen d'une force magnétique, comprenant: un boîtier (21) ouvert sur un côté; un plateau supérieur (23) fixé sur le côté ouvert de ce boîtier en fermant celui-ci de façon à définir une surface porteuse (42) pour les substances magnétiques et comportant par ailleurs une pluralité d'organes polaires magnétiques principaux (35) et auxiliaires (36) placés de façon alternée, ainsi que des séparateurs non-magnétiques (37, 50) disposés en sandwich entre les précédents, ces organes polaires et ces séparateurs étant incorporés de façon intégrale dans le plateau supérieur; et un ensemble d'aimants (20) monté dans ledit boîtier (21) de façon à pouvoir coulisser dans la direction suivant laquelle sont agencés lesdits organes polaires principaux (35) et auxiliaires (36), de façon à magnétiser et à démagnétiser la surface (42) du plateau supérieur (22), cet ensemble comportant une pluralité de traverses magnétiques (23) et d'aimants permanents (24) disposés de façon alternée suivant la direction précitée et qui sont intégralement incorporés, chacun des organes polaires principaux (35) se prolongeant à son extrémité la plus rapprochée dudit ensemble d'aimants (20), cette extension s'effectuant dans ladite direction au voisinage de cet ensemble (20) et venant au contact des traverses correspondantes (23) de celui-ci.

2. Etau magnétique comme défini dans la revendication 1, dans lequel la dimension longitudinale de chacun desdits prolongements (35a) mesurés suivant la direction précitée est approximativement égale à celle de chacune desdites traverses correspondantes (23) suivant cette même direction.

3. Etau magnétique comme défini dans la revendication 1 et dans la revendication 2, dans lequel lesdits organes polaires principaux comportant une pluralité de premiers organes principaux (35) présentant une section en forme de T renversé et un couple de tels seconds organes polaires principaux (38) présentant une section en forme de L et prenant en sandwich lesdits premiers organes polaires principaux, et dans lequel les organes polaires auxiliaires (36) ont une section rectangulaire et le séparateur respectif (37) comporte deux éléments à section coudée, ceux-ci étant combinés pour former coopérativement une section en forme de Y de manière à définir un renfoncement pour accueillir l'organe polaire auxiliaire (36) ainsi que les premier et second organes principaux (35, 38), l'organe polaire auxiliaire (36) et les séparateur (37) étant totalement combinés par un boulon de serrage pour former ledit plateau supérieur (22).

4. Etau magnétique comme défini dans la revendication 1 ou dans la revendication 2, dans lequel le séparateur (50) est un élément en forme de Y et est constitué d'une seule pièce à partir d'un couple de deux parties parallèles (50a) entre lesquelles s'insère ledit pôle auxiliaire (35), d'une partie intermédiaire (50b) reliant les extrémités des parties parallèles et d'une branche (50c) s'étendant à partir de la zone centrale de la partie intermédiaire.

# F I G . 1

# F I G . 2

F I G. 3

# F I G. 4

0 046 512

# F I G. 5

# F I G. 6